# EUROPÄISCHE PATENTSCHRIFT

(11) **EP 1 262 799 B1**
(45) Veröffentlichungstag und Bekanntmachung des Hinweises auf die Patenterteilung: **02.01.2013**
(21) Anmeldenummer: 02008610.4
(22) Anmeldetag: 17.04.2002
(51) Int. Cl.: G01V 5/00

(54) **Verfahren und Gerät zur Untersuchung von Gepäck und anderer Gegenstände**
Device and method for inspection of baggage and other objects
Dispositif et procédé d'inspection de baggage et d'autres objects

(30) Priorität: 23.05.2001 DE 10125532
(43) Veröffentlichungstag der Anmeldung: 04.12.2002
(73) Patentinhaber: Smiths Heimann GmbH, 65205 Wiesbaden (DE)
(72) Erfinder: Meder, Claus, 64380 Rossdorf (DE)
(74) Vertreter: Thul, Hermann

(56) Entgegenhaltungen:
- US-A- 5 661 774
- US-A- 5 754 617
- US-A- 5 838 759
- US-A- 5 903 623

## Beschreibung

Die Erfindung betrifft eine Inspektionsanlage zur Inspektion von Objekten insbesondere nach Spreng- und/ oder Explosivstoffen in Reisegepäckstücken.

Im Rahmen erhöhter Sicherheitsanforderungen auch auf Flughäfen und in anderen öffentlichen Einrichtungen ist es notwendig, Röntgen- bzw. Inspektionsanlagen, die insbesondere Spreng- und/oder Explosivstoffe detektieren können, in bereits vorhandene Einrichtungen, wie beispielsweise in einen Check-In-Counter eines Flughafens nachzurüsten. Häufig steht dabei für eine derartige Nachrüstung nur wenig Platz für eine Integration zur Verfügung.

Aus der EP 0 825 457 A2 ist ein tomographischer Scanner zur Detektion von unzulässigen Gegenständen in Reisegepäckstücken , auch von Sprengstoffen, bekannt, der um das Reisgepäckstück bewegt wird. Hierbei wird das Reisegepäckstück beispielsweise aus 8 unterschiedlichen Richtungen in einer Strahlenebene untersucht. Nachteilig bei derartigen Scannern ist der umfangreiche mechanische Aufbau als auch ein notwendige große Bauraum.

Die EP 0 984 302 A1 beschreibt eine gattungsgemäße Vorrichtung und ein Verfahren zur Prüfung von Reisegepäckstücken mittels Röntgendurchleuchtung. Das zu prüfende Gepäckstück wird auf einem Transportband in einen Scanner bewegt, der über einen gemeinsamen Arm eine Röntgeneinheit und eine Detektoreinheit gegenüber dem Gepäckstück verschwenkt. Das Abtasten erfolgt taktweise. Dazu wird das Gepäckstück solange eingefördert, bis ein Vortrieb durch ein Lichtsignal gestoppt wird. Dann wird die Abtastbewegung nach Art eines Scheibenwischers über das Gepäckstück gestartet, wobei die Röntgeneinheit und die Detektoreinheit von einer Position in eine zweite verfahren wird. Danach wird das Gepäckstück in Transportrichtung um einen Takt weiter transportiert und die Röntgeneinheit und die Detektoreinheit zum Abtasten von der zweiten Position wieder in die erste bewegt. Nach einer weiteren Ausführung wird die Röntgeneinheit und die Detektoreinheit an einem Schlitten quer zur Transportrichtung des Förderbandes hin- und herbewegt.

Die Aufgabe der Erfindung ist es, eine Inspektionsanlage der gattungsgemäßen Art anzugeben, die mit geringem Platz auskommt und zur Nachrüstung geeignet ist.

Gelöst wird die Aufgabe durch die Merkmale des Patentanspruchs 1.

Aus der Tatsache heraus, daß der verfügbare Bereich innerhalb der separaten Einrichtung sehr klein ist, liegt der Erfindung die Idee zugrunde, zumindest diesen als Abtastbereich zu nutzen, um den wenigstens eine bewegbare Strahlenquelle angeordnet ist, auf die eine mechanisch unabhängig von der Strahlenquelle verschiebbare Detektoranordnung ausgerichtet ist. Dabei sind die Strahlenquelle als auch die Detektoranordnung über mechanisch oder elektrisch gekoppelte Mittel, wie Stellglieder, miteinander gleichzeitig und parallel zueinander bewegbar. Die synchrone Bewegung wird mit Hilfe eines Rechners gesteuert und überwacht.

Die Detektoranordnung kann dabei aus mehreren Detektorpaaren bestehen, die in einer Detektorzeile untergebracht sind.

Ein bei diesem geringen Platz verfügbarer Strahlentunnel wird dadurch geschaffen, daß vorhandene Anlagenteile der nicht zur Inspektionsanlage gehörenden separaten Einrichtung in die Inspektionsanlage oder umgekehrt eingebunden werden. Dazu wird vor dem Abtastbereich eine Abschirmung, beispielsweise als Haube, auf bzw. um das Anlagenteil der separaten Einrichtung aufgesetzt. Bei Einbindung zumindest eines der dem verfügbaren Abtastbereich nachfolgenden Anlagenteils der Einrichtung kann auch hier eine Abschirmung auf bzw. um dieses Anlagenteil gesetzt werden. Häufig bietet sich jedoch die direkte Integration in das abschirmende Gehäuse der Inspektionsanlage an. Somit wird zumindest ein Anlagenteil oder ein ganzer Abschnitt einer funktional von der Inspektionsanlage unabhängigen Einrichtung mitbenutzt, welche in übergreifender Form somit Teilbestand der Inspektionsanlage werden, ohne daß diese selbst aus der eigentlichen Einrichtung herausgetrennt oder deren eigentlicher funktionaler Gebrauch eingeschränkt wird.

In Weiterführung der Erfindung ist ein sich schließender Vorhang oder Rolladen in der Abschirmung integriert, welcher in bevorzugter Variante am Eingang bzw. am Anfang der Abschirmung angebracht ist. Zudem kann der Einbau einer Kamera vorgesehen werden, um die ordnungsgemäße Funktion der eingebundenen Anlagenteile zu überwachen, die mit einer Abschirmung überdeckt sind.

In Weiterführung der Erfindung wird die wenigstens eine Strahlenquelle dann zugeschaltet, wenn das Objekt in den Abtastbereich vorgeschoben worden ist. Bevor das Objekt das Ende des Abtastbereiches erreicht, wird der Vorschub in Transportrichtung gestoppt, so daß sich das Objekt für den Abtastvorgang in Ruhelage befindet. Das Objekt wird in zwei Richtungen, entgegen und in Transportrichtung, abgetastet. Beim ersten Abtasten wird dabei das Objekt beispieslweise mit einer niederenergetischen Strahlung und beim weiteren Abtasten mit einer hochenergetischen Strahlung bestrahlt. Die dabei aufgenommenen Einzelteilbilder werden getrennt aufgenommen und eines davon derart gespiegelt, daß für diesen abgetasteten Teil des Objektes ein gemeinsames, bildpunktgenaues Teilbild resultiert, das gemeinsam ausgewertet und als Abbild des Objektes in bekannter Art und Weise beispielsweise zur Anzeige gebracht wird.

Wird nur eine Strahlenquelle verwendet, muß zur Bereitstellung der unterschiedlichen Strahlungsenergien diese jeweils umgeschaltet werden.

In einer weiteren vorteilhaften Ausführung können auch zwei Strahlenquellen in die Inspektionsanlage eingebunden sein.

Anhand eines Ausführungsbeispieles mit Zeichnung wird die Erfindung näher erläutert. Die Zeichnung, die Beschreibung und die Ansprüche enthalten zahlreiche Merkmale in Kombination, die der Fachmann zweckmäßigerweise auch einzeln betrachten und zu sinnvollen weiteren Kombinationen zusammenfassen wird.

### Es zeigt

- Fig. 1: ein vorhandenes, bekanntes Transportsystem, in dem eine Vorrichtung zur Inspektion integriert werden soll, in Seitendarstellung,
- Fig. 2 a- h): eine Darstellung der einzelnen Verfahrensschritte des Abtastvorganges
- Fig. 3: eine weitere Variante mit wenigstens zwei Strahlenquellen.

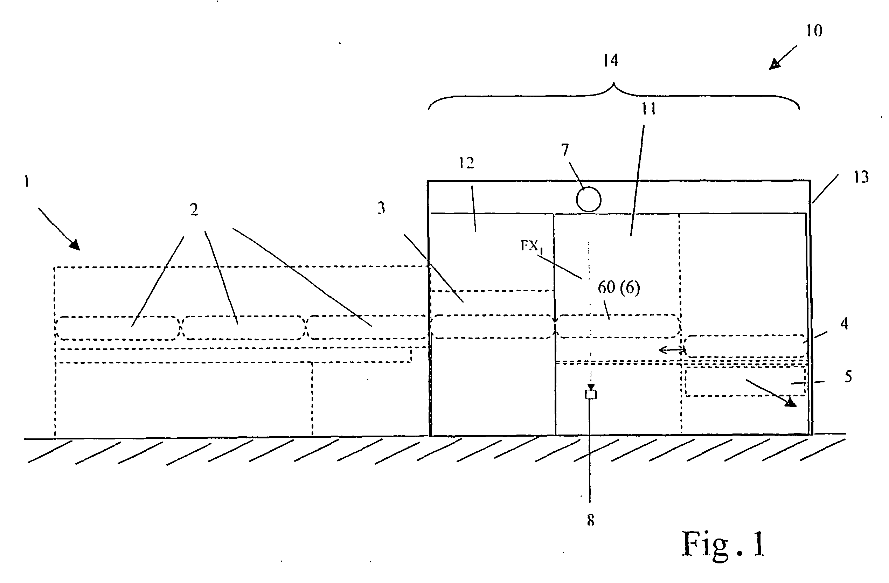

In Fig. 1 ist mit 1 eine von einer Inspektionsanlage 10 funktional unabhängige Einrichtung, hier ein Transportsystem, gekennzeichnet, welches hier Teil eines Check-In-Counters ist, die mit der Inspektionsanlage 10 nachgerüstet werden soll.
Das Transportsystem 1 weist einzelne Transportbänder 2 auf, die Objekte 20 (hier nicht dargestellt), beispielsweise einen Koffer oder andere Reisegepäckstücke, zu einem sogenannten Umwerfer oder Kippband 3 transportieren. Dieses bringt die auf den Bändern 2 stehenden Reisegepäckstücke 20 in eine horizontale Lage und zentriert sie für den weiteren Transport. Dem schließen sich ein Band 6 und ein Band 4 an. Am Ende der Transportstrecke des Transportsystems 1 wird das Reisegepäckstück 20 vom Band 4 aus in eine Wanne 5 gelegt. Das Band 4 wird dazu unter das Band 6 verfahren, wozu das Band 4 gegenüber dem Band 6 tiefer angebracht ist. Die Wanne 5 wird danach mit dem Reisegepäckstück 20 und aus dem Transportsystem 1 in ein weiteres, nicht näher dargestelltes Transportsystem übergeben.

Die Prüfung der Reisegepäckstücke 20 insbesondere auf Spreng- und/oder Explosivstoffe soll hierbei nach dem Kippband 3 erfolgen. Dieser Bereich, der beispielsweise durch das Band 6 bestimmt wird, ist jedoch sehr kurz für eine derartige Nachrüstung, da die Länge des Bandes 6 typischer Weise der einer maximalen Reisegepäckstücklänge der Reisegepäckstücke entspricht, welche in der Praxis maximal ca. 100 cm lang sind.

Nach Fig. 1 ist nun vorgesehen, das vorhandene Band 6 gegen ein strahlendurchlässiges Band 60 zu ersetzt und unterhalb des Bandes 60 vorzugsweise eine Gleitplatte 61 vorzusehen, die eine geringe Absorption besitzt und das Band 60 abstützt. Die Länge des Bandes 6 der Fremdvorrichtung 1 bestimmt dabei die maximale Länge des Bandes 60 und der Gleitplatte 61 und damit die maximale Länge des Abtastbereiches für das Reisegepäckstück 20. Der Abtastbereich bestimmt die Länge eines Transportschachtes 11, der Teil eines Strahlentunnels 14 der Inspektionsanlage 10 ist, um den wenigstens eine Strahlenquelle 7 sowie eine darauf ausgerichtete Detektoranordnung 8 angebracht sind. Die Strahlenquelle 7 als auch die Detektoranordnung 8, hier eine Detektorzeile, sind bewegbar und parallel zum Band 60 und zur Gleitplatte 61 in und entgegen der Transportrichtung des Reisegepäckstückes 20 verschiebbar.

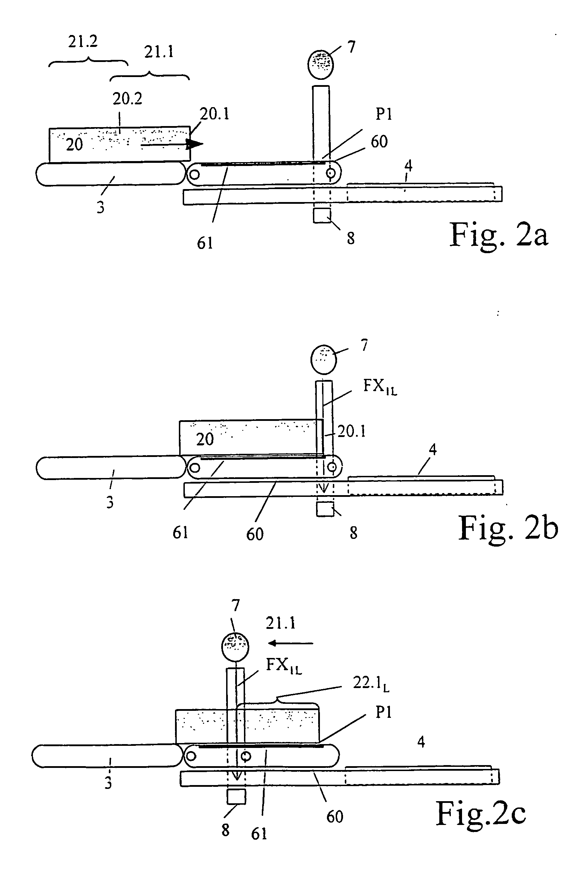

Das Verfahren wird anhand der Fig. 2a - 2h beschrieben.

Wie in Fig. 2a dargestellt, wird das Reisegepäckstück 20 vom vorhergehenden Anlagenteil 3 auf das Band 60 transportiert, und wie in Fig. 2b erkennbar, zwischen der Strahlenquelle 7 und der Detektorzeile 8 vorgeschoben, wobei ein Reisegepäckstückanfang 20.1 in einem definierten Abstand zum Ende des Bandes 6 liegt.
Während nun das Reisegepäckstück 20 in dieser Position verharrt, wird die Strahlenquelle 7 zusammen und mit der Detektorzeile 8 aus einer ersten Position P1 heraus über den ersten Bereich 21.1 entgegen der Transportrichtung des Reisegepäckstückes 20 verfahren währenddessen das Reisegepäckstück 20 mit einer niederenergetischen Strahlung FX_{1L} abgetastet wird, wie in Fig. 2c dargestellt. Ein dabei aufgenommenes niederenergetisches Einzelteilbild 22.1_{L} wird im nicht näher dargestellten Rechner abgespeichert.

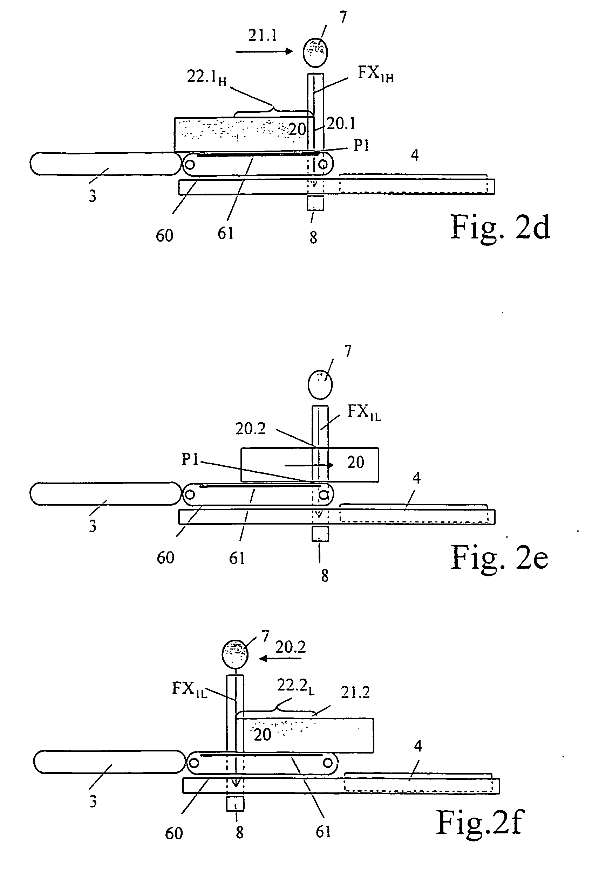

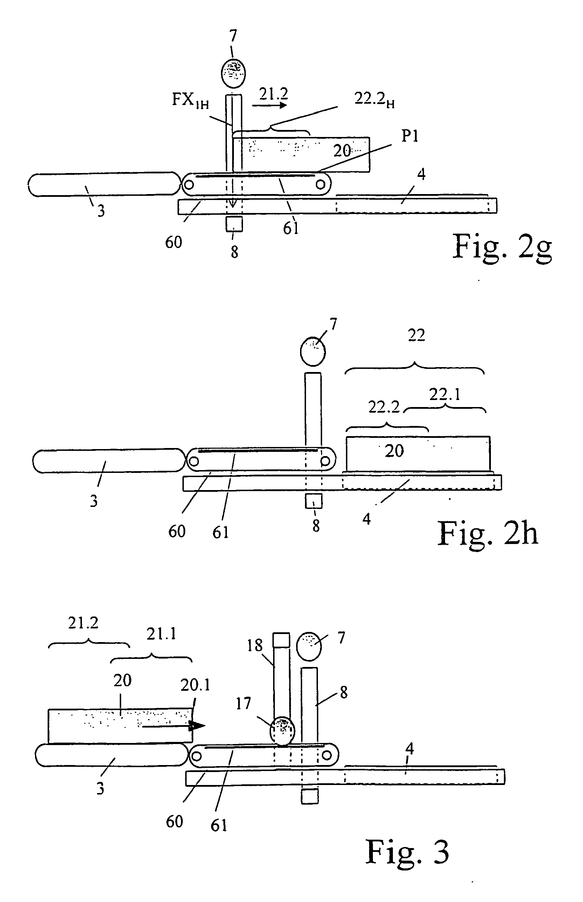

Danach wird das Reisegepäckstück 20 entgegen der ersten Abtastrichtung bis zur ersten Position P1 über den ersten Bereich 21.1 erneut abgetastet, wozu der Energiebereich der Strahlenquelle 10 vorher umgeschaltet und das Reisegepäckstück 20 dann mit einer hochenergetischen Strahlung FX_{1H} bestrahlt wird, wie in Fig. 2d aufgezeigt.
Ein dabei aufgenommenes hochenergetisches Einzelteilbild 22.1_{H} wird mit dem im Rechner abgespeicherten niederenergetischen Teilbild 22.1_{L} zu einem ersten Teilbild 22.1 des Reisegepäckstückes 20 zusammengesetzt und ausgewertet. Dieser Schritt kann bereits zu diesem Zeitpunkt, aber auch erst nach Beendigung des vollständigen Abtastvorganges durchgeführt werden.
Davon unabhängig wird das Reisegepäckstück 20 nunmehr soweit verfahren, bis die Reisegepäckstückmitte 20.2 kurz vor der Strahlenebene des Strahls FX₁ vor die Position P1 zu liegen kommt, wie in Fig. 2e dargestellt. Dabei wird der Energiebereich der Strahlenquelle 7 vorzugsweise erneut auf niederenergetische Strahlung FX_{1L} umgeschaltet. Vorteilhaft ist eine gewisse Überlappung des ersten Bereiches 21.1 und dem nachfolgenden, noch abzutastenden Bereiches 21.2 .
Dem folgt erneut die gemeinsame Verstellung der Strahlenquelle 7 und der Detektorzeile 8 entgegen der Transportrichtung des Reisegepäckstückes 20 aus der Position P1 heraus, um den zweiten Bereich 21.2 zuerst mit der niederenergetischen Strahlung FX_{1L} (Fig. 2f) und danach mit der hochenergetischen Strahlung FX_{1H} (Fig. 2g) über den zweiten Bereich 21.2 abzutasten. Ein dabei erhaltenes niederenergetisches Einzelteilbild 22.2_{L} und ein hochenergetisches Einzelteilbild 22.2_{H} bilden ein gemeinsames zweites Teilbild 22.2.
Die beiden so gewonnen Teilbilder 22.1 und 22.2 werden zu einem Gesamtbild 22 zusammengesetzt (in Fig. 2h angedeutet), wobei der sich überlappende Bereich bei der Auswertung des Gesamtbildes 22 des Reisegepäckstückes 20 mit berücksichtigt wird.

Das Ausschleusen des auf das Band 4 verschobenen Reisegepäckstückes 20 aus dem Transportsystem 1 erfolgt dann in bekannter Art und Weise.

Die Verschiebung der Strahlenquelle 7 sowie der Detektorzeile 8 erfolgt synchron, wozu nicht näher dargestellte Mittel, beispielsweise Linearführungen mit Spindelantrieb, zentral angesteuert werden. Dieses kann durch den Rechner koordiniert und überwacht werden.

Der vom Transportschacht 11 gebildete Strahlentunnel 14 ist jedoch bei einer Bandlänge von maximal einer maximalen Reisegepäckstücklänge zu kurz. Eine Verlängerung erfolgt durch Einbindung der dem Band 60 davor befindlichen und/oder nachfolgenden Bänder 2, 3, 4. Zur Einbindung zumindest des vor dem Transportschacht befindlichen Kippbandes 3 wird eine mit dem Transportschacht 11 zusammenwirkende vordere Abschirmung 12 darüber gestülpt, wodurch der Strahlenschutz nach vorne verlängert wird, so daß keine Strahlen dorthin austreten können.
Für den Strahlenschutz des eingebundenen Bandes 4 ist neben der Möglichkeit, auch hier eine Abschirmhaube vorzusehen, in einer bevorzugten Ausgestaltung dieses Band 4 im abschirmenden Gehäuse 13 der Inspektionsanlage 10 integriert.

In einer weiterer vorteilhaften Variante ist in der Abschirmhaube 12 ein sich schließender Vorhang oder Rolladen integriert, welcher vorzugsweise am Eingang der Abschirmhaube 12 angebracht ist und damit auch den Eingang des Kippbandes 3 während des eigentlichen Prüfvorganges verschließt (in den Figuren nicht näher dargestellt).

Weiterhin ist es vorteilhaft, eine Kamera (nicht näher dargestellt) innerhalb der Abschirmung 12 zu installieren, um die sachgemäße Arbeit auf dem Kippband 3 kontrollieren zu können.

Die Detektorzeile 8 besteht aus mehreren Detektorpaaren, die vorzugsweise wenigstens einen niederenergetischen und einen dahinter befindlichen höherenergetischen Detektor aufweisen (nicht näher dargestellt).

Im Rahmen der Erfindung ist es auch möglich, daß nicht, wie beschrieben, die Bänder 3, 4 des Transportsystems 1 in das Gehäuse 13 der Inspektionsanlage 10 eingebunden werden, sondern die Inspektionsanlage 10 mit seinem Band 60 in ein Gehäuse der separaten Einrichtung 1 (nicht näher dargestellt).

Auch ist die Erfindung nicht auf der Verwendung nur einer Strahlenquelle 7 und einer darauf ausgerichteten Detektorzeile 8 beschränkt. Es besteht die Möglichkeit, wenigstens eine weitere Strahlenquelle 17 vorzusehen, die beispielsweise zur ersten Strahlenquelle 7 seitlich versetzt angeorndet ist und auf die eine weitere Detektorzeile 18 ausgerichtet ist, wie in Fig. 3 dargestellt. Auch diese können innerhalb der Inspektionsanlage 10 verschiebbar angebracht sein.

Da in der Praxis die maximale Reisegepäckstücklänge ca. 100 cm beträgt, wird mit der vorgenannten Lösung eine Inspektionsanlage 10 aufgezeigt, die mit geringem Aufwand in einen schmalen Bereich einbaubar ist.

## Patentansprüche

1. Verfahren zur Inspektion von Objekten (20) bei dem das zu prüfende Objekt (20) zwischen wenigstens eine bewegbare Strahlenquelle (7) und eine darauf ausgerichtete Detektoranordnung (8) bewegt wird, die das stillstehende Objekt (20) mittels Röntgendurchleuchtung abtasten, **dadurch gekennzeichnet, daß**
- die Strahlenquelle (7) und die Detektoranordnung (8) parallel über das Objekt (20) verschoben werden, so daß
- das Objekt (20) in und entgegen der Transportrichtung des Objektes (20) abgescannt wird, wobei
- das Objekt (20) einmal mit einer niederenergetischen Strahlung (FX_{1L}) und das andere mal mit einer hochenergetischen Strahlung (FX_{1H}) abgetastet wird, und
- daß ein dabei aufgenommenes hochenergetisches Bild mit dem aufgenommenen niederenergetischen Bild zu einem Bild des Objektes zusammengesetzt und ausgewertet wird.

2. Verfahren nach Anspruch 1, **dadurch gekennzeichnet, daß**
- die niederenergetische Strahlung (FX_{1L}) als auch die hochenergetische Strahlung (FX_{1H}) der wenigstens einen Strahlenquelle (7) durch Umschaltung der Strahlenquelle (7) Jeweils zugeschaltet werden.

3. Verfahren nach Anspruch 1 oder 2, **dadurch gekennzeichnet, daß**
- das Objektes (20) nach getaktetem Vorrücken erneut abgetastet wird, bis das gesamte Objekt (20) abgetastet ist.

4. Verfahren nach einem der Ansprüche 1 bis **3, dadurch gekennzeichnet, daß** ein beim Abtasten mit der niederenergetischen Strahlung (FX_{1L}) aufgenommenes Teilbild (22.1_{L}, 22.2_{L}) und ein Abtasten mit der hochenergetischen Strahlung (FX_{1H}) aufgenommenes Teilbild (22.1_{H}, 22.2_{H}) ein gemeinsames Bild (22.1, 22.2, 22) ergeben, welches ausgewertet wird.

5. Verfahren nach einem der Ansprüche 1 bis 4, **dadurch gekennzeichnet, daß** die Verstellung der Strahlenquelle (7, 17) sowie die Detektoranordnung (8, 18) synchron Jedoch mechanisch voneinander getrennt über Mittel erfolgt, die von einem Rechner zentral angesteuert werden.

6. Inspektionsanlage zur Durchführung eines Verfahrens nach einem der Ansprüche 1 bis 5, **dadurch gekennzeichnet, daß**
- sie einen Strahlentunnel (14) aufweist, um den wenigstens eine Röntgenstrahlungsquelle, welche zwischen hoch- und niederenergetischer Strahlung umschaltbar ist, (7) sowie eine darauf ausgerichtete Detektoranordnung (8) angebracht sind, wobei die Strahlenquelle (7) und die Detektoranordnung (8) bewegbar in und entgegen der Transportrichtung des Objekte (20) verschiebbar sind, daß
- sie in ein Gehäuse einer separaten Einrichtung (1) oder umgekehrt eingebunden ist und daß
- zur Verlängerung eines Strahlentunnels (14) der Inspektionsanlage (10) vor einem Abtastbereich eine mit diesem zusammenwirkende Abschirmung (12) auf oder um ein zur separaten Einrichtung (1) gehörendes Anlagenteil (3) angebracht ist.

7. Inspektionsanlage nach Anspruch 6, **dadurch gekennzeichnet, daß** ein dem Abtastbereich nachfolgendes Anlagenteil (4) der separaten Einrichtung (1) in die Inspektionsanlage (10) eingebunden und mit einer Abschirmung versehen ist.

8. Inspektionsanlage nach Anspruch 6 oder 7, **dadurch gekennzeichnet**, das Im Abtastbereich ein strahlendurchlässlges Band (60) eingebunden ist, welches ein Band (6) der separaten Einrichtung (1) ersetzt.

9. Inspektionsanlage nach einem der Ansprüche 6 bis 8, **dadurch gekennzeichnet, daß** das Anlagenteil (4) im abschirmenden Gehäuse (13) der Inspektionsanlage (10) eingebunden ist.

10. Inspektionsanlage nach einem der Ansprüche 6 bis 9, **dadurch gekennzeichnet, daß** die separate Einrichtung (1) ein Transportsystem eines Check-In-Counters ist.

11. Inspektionsanlage nach einem der Ansprüche 6 bis 10, **dadurch gekennzeichnet, daß** die Länge der Abschirmung (12) eine maximale Reisegepäckstücklänge nicht unterschreitet.

12. Inspektionsanlage nach einem der Ansprüche 6 bis 11, **dadurch gekennzeichnet, daß** die maximale Relsegepäckstücklänge einen Bereich von 100 cm umfaßt.

13. Inspektionsanlage nach einem der Ansprüche 6 bis 12, **dadurch gekennzeichnet, daß** ein sich schließender Vorhang oder Rolladen In der Abschirmung (12) integriert ist.

14. Inspektionsanlage nach Anspruch 13, **dadurch gekennzeichnet, daß** der Vorhang oder Rolladen am Eingang bzw. am Anfang der Abschirmung (12) angebracht ist.

15. Inspektionsanlage nach einem der Ansprüche 6 bis 14, **dadurch gekennzeichnet, daß** eine Kamera innerhalb der Abschirmung (12) vorgesehen ist.

16. Inspektionsanlage nach einem der Ansprüche 6 bis 15, **dadurch gekennzeichnet, daß** im Band (60) eine Gleitplatte (61) mit einer geringen Absorption angebracht ist.

## Claims

1. Method for the inspection of objects (20), in which the object (20) to be checked is moved between at least one movable radiation source (7) and a detector arrangement (8) aimed at the latter, which scan the stationary object (20) by means of x-radiography, **characterized in that**
- the radiation source (7) and the detector arrangement (8) are displaced in parallel over the object (20), so that
- the object (20) is scanned in and counter to the transport direction of the object (20),
- the object (20) being scanned once with low-power radiation (FX_{1L}) and another time with high-power radiation (FX_{1H}), and
- **in that** a high-power image recorded in the process is combined with the low-power image recorded to form an image of the object and is evaluated.

2. Method according to Claim 1, **characterized in that**
- the low-power radiation (FX_{1L}) and the high-power radiation (FX_{1H}) from the at least one radiation source (7) are in each case connected up by switching over the radiation source (7).

3. Method according to Claim 1 or 2, **characterized in that**
- the object (20) is scanned again after being pushed forward cyclically, until the entire object (20) has been scanned.

4. Method according to one of Claims 1 to 3, **characterized in that**
a partial image (22.1_{L}, 22.2_{L}) recorded during scanning with the low-power radiation (FX_{1L}) and a partial image (22.1_{H}, 22.2_{H}) recorded during scanning with the high-power radiation (FX_{1H}) result in a common image (22.1, 22.2, 22), which is evaluated.

5. Method according to one of Claims 1 to 4, **characterized in that**
the displacement of the radiation source (7, 17) and of the detector arrangement (8, 18) is carried out synchronously but mechanically separately from each other by means which are activated centrally by a computer.

6. Inspection system for implementing a method according to one of Claims 1 to 5, **characterized in that**
- it has a radiation tunnel (14) around which at least one x-ray source (7), which can be switched over between high and low power radiation, and a detector arrangement (8) aimed at the said source are fitted, the radiation source (7) and the detector arrangement (8) being moveably displaceable in and counter to the transport direction of the object (20), **in that**
- it is incorporated in a housing of a separate device (1) or vice versa, and **in that**
- in order to lengthen a radiation tunnel (14) of the inspection system (10) in front of a scanning region, a shield (12) interacting with the latter is fitted on or around a part of the system (3) that belongs to the separate device (1).

7. Inspection system according to Claim 6, **characterized in that** a part of the plant (4) following the scanning region and belonging to the separate device (1) is incorporated in the inspection system (10) and is provided with a shield.

8. Inspection system according to Claim 6 or 7, **characterized in that** a belt (60) that is transparent to radiation and replaces a belt (6) of the separate device (1) is incorporated in the scanning region.

9. Inspection system according to one of Claims 6 to 8, **characterized in that** the part of the plant (4) is incorporated in the shielding housing (13) of the inspection system (10).

10. Inspection system according to one of Claims 6 to 9, **characterized in that** the separate device (1) is a transport system of a check-in counter.

11. Inspection system according to one of Claims 6 to 10, **characterized in that** the length of the shield (12) does not fall below a maximum length of an item of travel baggage.

12. Inspection system according to one of Claims 6 to 11, **characterized in that**
the maximum length of an item of travel baggage covers a range of 100 cm.

13. Inspection system according to one of Claims 6 to 12, **characterized in that** a closing curtain or shutter is integrated in the shield (12).

14. Inspection system according to Claim 13, **characterized in that** the curtain or shutter is fitted to the entry or to the start of the shield (12).

15. Inspection system according to one of Claims 6 to 14, **characterized in that** a camera is provided inside the shield (12).

16. Inspection system according to one of Claims 6 to 15, **characterized in that** a sliding plate (61) having low absorption is fitted in the belt (60).

## Revendications

1. Procédé pour l'inspection d'objets (20) dans lequel l'objet (20) à examiner est déplacé entre au moins une source de rayonnement (7) mobile et un dispositif détecteur (8) dirigé vers celle-ci, qui explorent l'objet (20) immobile par radiographie, **caractérisé en ce que**
- la source de rayonnement (7) et le dispositif détecteur (8) sont déplacés parallèlement au-dessus de l'objet (20) de manière à ce que
- l'objet (20) soit soumis à un mouvement de balayage dans la direction de transport de l'objet (20) et en direction opposée, dans lequel
- l'objet (20) est exploré en alternance avec un rayonnement à faible énergie (FX_{1L}) puis avec un rayonnement à haute énergie (FX_{1H}), et
- **en ce qu'**une image à haute énergie ainsi enregistrée est combinée et exploitée avec l'image à faible énergie enregistrée pour conduire à une image de l'objet.

2. Procédé selon la revendication 1, **caractérisé en ce que**
- le rayonnement à faible énergie (FX_{1L}) ainsi que le rayonnement à haute énergie (FX_{1H}) de l'au moins une source de rayonnement (7) sont respectivement activés par permutation de la source de rayonnement (7).

3. Procédé selon la revendication 1 ou 2, **caractérisé en ce que**
- l'objet (20), après s'être avancé pas à pas, est de nouveau exploré jusqu'à ce que la totalité de l'objet (20) soit explorée.

4. Procédé selon l'une quelconque des revendications 1 à 3, **caractérisé en ce qu'**une image partielle (22.1_{L}, 22.2_{L}) enregistrée lors de l'exploration effectuée avec le rayonnement à faible énergie (FX_{1L}) et une image partielle (22.1_{L}, 22.2_{H}) enregistrée lors de l'exploration effectuée avec le rayonnement à haute énergie (FX_{1H}) conduisent à une image combinée (22.1, 22.2, 22) qui est exploitée.

5. Procédé selon l'une quelconque des revendications 1 à 4, **caractérisé en ce que** l'ajustement de la source de rayonnement (7, 17) et du dispositif détecteur (8, 18) s'effectue séparément pour chacun d'entre eux de manière synchronisée mais mécanique à l'aide de moyens qui sont commandés de manière centralisée par un calculateur.

6. Système d'inspection selon l'une quelconque des revendications 1 à 5, **caractérisé**
- **en ce qu'**il comprend un tunnel de rayonnement (14) autour duquel son montés l'au moins une source de rayonnement X (7), qui peut être permutée entre des rayonnements à haute et à faible énergie, et un dispositif détecteur (8) dirigé vers celle-ci, dans lequel la source de rayonnement (7) et le dispositif détecteur (8) sont mobiles et peuvent être déplacés dans la direction de transport de l'objet (20) et en direction opposée,
- **en ce qu'**il est incorporé dans un boîtier d'un dispositif (1) séparé ou non, et
- **en ce que**, pour allonger un tunnel de rayonnement (14) du système d'inspection (10), un blindage (12) coopérant avec celui-ci est monté devant une zone d'exploration, sur ou autour d'une partie de système (3) faisant partie du dispositif séparé (1).

7. Système d'inspection selon la revendication 6, **caractérisé en ce qu'**une partie de système (4) située en aval de la zone d'exploration du dispositif séparé (1) est incorporée au système d'inspection (10) et est munie d'un blindage.

8. Système d'inspection selon la revendication 6 ou 7, **caractérisé en ce qu'**une bande (60) transparente au rayonnement est incorporée dans la zone d'exploration, laquelle bande remplace une bande (6) du dispositif séparé (1).

9. Système d'inspection selon l'une quelconque des revendications 6 à 8, **caractérisé en ce que** la partie de système (4) est incorporée au boîtier (13) blindé du système d'inspection (10).

10. Système d'inspection selon l'une quelconque des revendications 6 à 9, **caractérisé en ce que** le dispositif séparé (1) est un système de transport d'un comptoir d'enregistrement.

11. Système d'inspection selon l'une quelconque des revendications 6 à 10, **caractérisé en ce que** la longueur du blindage (12) n'est pas supérieure à la longueur maximale d'un bagage.

12. Système d'inspection selon l'une quelconque des revendications 6 à 11, **caractérisé en ce que** la longueur maximale d'un bagage se situe dans un intervalle de 100 cm.

13. Système d'inspection selon l'une quelconque des revendications 6 à 12, **caractérisé en ce qu'**un rideau ou un volet fermant est intégré au blindage (12).

14. Système d'inspection selon la revendication 13, **caractérisé en ce que** le rideau ou le volet est monté à l'entrée ou au début du blindage (12).

15. Système d'inspection selon l'une quelconque des revendications 6 à 14, **caractérisé en ce qu'**une caméra est prévue à l'intérieur du blindage (12).

16. Système d'inspection selon l'une quelconque des revendications 6 à 15, **caractérisé en ce qu'**une plaque coulissante (61) présentant une faible absorption est montée dans la bande (60).
